# EUROPEAN PATENT APPLICATION

(11) **EP 4 660 694 A1**
(43) Date of publication of application: **10.12.2025**
(21) Application number: 24848284.6
(22) Date of filing: 30.07.2024
(51) Int. Cl.: G02F 1/1335, G02F 1/1333

(54) **OPTICAL MODULE, DISPLAY APPARATUS, DISPLAY DEVICE, AND ELECTRONIC DEVICE**

(30) Priority: 01.08.2023 CN 202310970152
(71) Applicant: Huawei Technologies Co., Ltd., Shenzhen, Guangdong 518129 (CN)
(72) Inventor: CHEN, Chuyang, Shenzhen, Guangdong 518129 (CN); CHANG, Yiwen, Shenzhen, Guangdong 518129 (CN); ZHOU, Xunping, Shenzhen, Guangdong 518129 (CN); CHEN, Yu, Shenzhen, Guangdong 518129 (CN); NI, Huan, Shenzhen, Guangdong 518129 (CN); ZHU, Ming, Shenzhen, Guangdong 518129 (CN)
(74) Representative: Maiwald GmbH
(86) International application number: PCT/CN2024/108600
(87) International publication number: WO 2025/026329

(57) **Abstract**

Embodiments of this application provide an optical module, a display apparatus, a display device, and an electronic device, to resolve a problem that the display apparatus provided with an anti-glare cover cannot meet a low sparkle and high definition. The optical module is used in the display apparatus, the display apparatus includes a display panel, and the optical module includes a light homogenization layer and an anti-glare layer that are sequentially disposed in a light emitting direction of the display panel. Light intensity distribution of emergent light generated by the light homogenization layer when collimated light is vertically incident meets that light intensity attenuation is less than or equal to a first threshold in a specified emergent angle range. The light homogenization layer is configured to homogeneously mix light emitted by the display panel. A sparkle cannot be generated when light mixed by the light homogenization layer is incident on the anti-glare layer. In this way, there is no need to increase haze of the anti-glare layer to suppress the sparkle, and display imaging definition can be ensured.

## Description

This application claims priority to Chinese Patent Application No. 202310970152.3, filed with the China National Intellectual Property Administration on August 1, 2023 and entitled "OPTICAL MODULE, DISPLAY APPARATUS, DISPLAY DEVICE, AND ELECTRONIC DEVICE", which is incorporated herein by reference in its entirety.

### TECHNICAL FIELD

This application relates to the field of display technologies, and in particular, to an optical module, a display apparatus, a display device, and an electronic device.

### BACKGROUND

A display apparatus is usually externally protected by using a cover made of a light-transmissive material (for example, glass or plastic). Under irradiation of ambient light (for example, outdoor sunlight and indoor light), visual viewing effect of an existing display apparatus is prone to be affected by reflected light of a flat panel, and consequently, glare is generated. For example, when the display apparatus is viewed in a case of strong ambient light, the flat panel is prone to generating specular reflection, and therefore an obvious mirror image is prone to be generated. Consequently, the visual viewing effect of the display apparatus is interfered with.

To suppress glare, surface roughness of the flat panel is usually increased to form an anti-glare layer, so that light irradiated to the flat panel is scattered. Therefore, the light irradiated to the flat panel is not prone to generating specular reflection. This reduces adverse impact of the flat panel on the visual viewing effect of a display device. The anti-glare layer scatters the ambient light, and scatters light emitted by pixels. After light emitted by different pixels is scattered, crosstalk occurs, causing a sparkle. Usually, the sparkle can be suppressed by increasing haze of the anti-glare layer. However, this causes a decrease in imaging definition of the display apparatus.

### SUMMARY

To resolve a problem that it is difficult for a display apparatus provided with an anti-glare layer to balance a low sparkle and high definition, embodiments of this application provide an optical module, a display apparatus, a display device, and an electronic device.

According to a first aspect, an embodiment of this application provides an optical module. The optical module is used in a display apparatus, the display apparatus includes a display panel, and the optical module includes a light homogenization layer and an anti-glare layer that are sequentially disposed in a light emitting direction of the display panel. Light intensity distribution of emergent light generated by the light homogenization layer when collimated light is vertically incident meets that light intensity attenuation is less than or equal to a first threshold in a specified emergent angle range.

The optical module provided in this embodiment of this application includes the light homogenization layer and the anti-glare layer. The anti-glare layer can prevent generation of glare, and the light homogenization layer can homogeneously mix light emitted by the display panel. When no light homogenization layer is disposed, and the light emitted by the display panel is scattered by the anti-glare layer, crosstalk between light of different colors occurs. Because a bright spot or a dark spot further occurs during scattering, a sparkle is formed. However, in the optical module provided in this embodiment of this application, the light homogenization layer is disposed before the anti-glare layer. An emergent angle of the light emitted by the display panel after passing through the light homogenization layer is increased. When the homogeneously mixed light is incident on the anti-glare layer and then scattered, scattering is also performed on mixed light of different colors instead of light of a single color, so that a case in which brightness and darkness alternate is not caused, and generation of the sparkle can be suppressed. Therefore, there is no need to increase haze of the anti-glare layer to suppress the sparkle, and the optical module provided in this embodiment of this application is used to suppress glare and generation of the sparkle on a screen by using combined effect of the light homogenization layer and the anti-glare layer. A small haze parameter may be set for the anti-glare layer. Therefore, high imaging definition of the anti-glare layer in the display apparatus can be ensured, and requirements of a low sparkle and high definition can be met.

In a possible implementation, roughness of the anti-glare layer is 0.2 µm to 0.35 µm, and haze of the anti-glare layer is less than or equal to a second threshold.

In a possible implementation, the light intensity distribution of the emergent light generated by the light homogenization layer when the collimated light is vertically incident meets that the light intensity attenuation is less than or equal to the first threshold in the specified emergent angle range, where the light intensity attenuation indicates attenuation of light intensity of the emergent light relative to light intensity of emergent light at an emergent angle of 0, and the first threshold is less than or equal to 30%.

The light intensity attenuation of the emergent light of the light homogenization layer is small in the specified emergent angle range, which is equivalent to that an emergent angle of light of the light homogenization layer is expanded. The light emitted by the display panel may be homogeneously mixed after passing through the light homogenization layer, so that sparkles can be reduced when scattering effect of the anti-glare layer is combined.

In a possible implementation, the specified emergent angle range includes (-2°~ + 2°) to (-60°~ + 60°).

A larger emergent angle range of the light homogenization layer indicates smaller attenuation of emergent light intensity in the emergent angle range, better light homogenization effect of the light homogenization layer, and stronger sparkle suppression effect.

In a possible implementation, the light homogenization layer includes a filling layer and a grating embedded into the filling layer, where a refractive index of the grating is different from a refractive index of the filling layer.

The light homogenization layer is provided with the grating and the filling layer that have different refractive indexes. The grating and the filling layer have different refractive indexes. When the light emitted by the display panel passes through the grating and the filling layer that have different refractive indexes, the emergent angle can be increased, and light intensity attenuation can be reduced.

In a possible implementation, the refractive index of the grating and the refractive index of the filling layer meet: |n1-n2|>0.005, n1 is the refractive index of the grating, and n2 is the refractive index of the filling layer.

In a possible implementation, the filling layer covers a side that is of the grating and that is away from the display panel.

In a possible implementation, the refractive index of the grating and the refractive index of the filling layer meet: n1-n2>0.005, n1 is the refractive index of the grating, and n2 is the refractive index of the filling layer.

In a possible implementation, the grating includes a plurality of columnar structures, and a distance between centers of any two of the columnar structures and a feature size of the columnar structure meet: 3D≥P>D, D is the feature size of the columnar structure, and P is the distance between the centers of the any two of the columnar structures.

In a possible implementation, a thickness of the light homogenization layer is less than or equal to 150 µm.

In a possible implementation, the second threshold is less than or equal to 35%. The anti-glare layer can maintain a small haze parameter, so that impact on imaging definition of the display apparatus can be reduced, and high definition can be maintained while the sparkle is suppressed.

In a possible implementation, an anti-glare value of the anti-glare layer is less than or equal to 10%.

In a possible implementation, a thickness of the anti-glare layer is less than or equal to 1 mm.

According to a second aspect, an embodiment of this application further provides a display apparatus. The display apparatus includes a display panel, a polarizer, and the module according to any one of the implementations of the first aspect. The optical module includes the light homogenization layer and the anti-glare layer. The polarizer, the light homogenization layer, and the anti-glare layer are sequentially disposed in the light emitting direction of the display panel, or the light homogenization layer, the polarizer, and the anti-glare layer are sequentially disposed in the light emitting direction of the display panel.

In a possible implementation, the display apparatus further includes a touch circuit layer, and the touch circuit layer is disposed between the light homogenization layer and the polarizer.

In a possible implementation, the display apparatus further includes a touch circuit, and the touch circuit is integrated on the display panel.

According to a third aspect, an embodiment of this application further provides a display apparatus. The display apparatus includes a display panel and the module according to any one of the implementations of the first aspect. The optical module includes the light homogenization layer and the anti-glare layer. A color filter is provided on the display panel, and the light homogenization layer and the anti-glare layer are sequentially disposed in the light emitting direction of the display panel.

According to a fourth aspect, an embodiment of this application further provides a display device. The display device includes a housing and the display apparatus according to any one of the implementations of the second aspect. The display apparatus is mounted on the housing, and the housing is configured to support and protect the display apparatus.

According to a fifth aspect, an embodiment of this application further provides an electronic device. The electronic device includes a processor and the display apparatus according to any one of the implementations of the second aspect. The display apparatus is electrically connected to the processor.

### BRIEF DESCRIPTION OF DRAWINGS

FIG. 1 is a diagram of an electronic device according to an embodiment of this application;
FIG. 2 is a diagram of a structure of an electronic device according to an embodiment of this application;
FIG. 3 is a diagram of glare generation according to an embodiment of this application;
FIG. 4 is a diagram of suppressing glare by an anti-glare layer according to an embodiment of this application;
FIG. 5 is a diagram of an anti-glare layer according to an embodiment of this application;
FIG. 6 is a diagram of generating a sparkle by an anti-glare layer according to an embodiment of this application;
FIG. 7 is a diagram of a sparkle on a screen according to an embodiment of this application;
FIG. 8 is a diagram of haze according to an embodiment of this application;
FIG. 9 is a diagram of an optical module according to an embodiment of this application;
FIG. 10 is another diagram of an optical module according to an embodiment of this application;
FIG. 11 is a diagram of generating a sparkle by an anti-glare layer according to an embodiment of this application;
FIG. 12 is a diagram of an operating principle of an optical module according to an embodiment of this application;
FIG. 13 is a diagram of light intensity distribution of emergent light of a light homogenization layer according to an embodiment of this application;
FIG. 14 is a diagram of comparison between light intensity distribution of emergent light of a light homogenization layer according to an embodiment of this application;
FIG. 15 is a diagram of a structure of a light homogenization layer according to an embodiment of this application;
FIG. 16 is a diagram of a structure of another light homogenization layer according to an embodiment of this application;
FIG. 17 is a diagram of structures of several light homogenization layers according to an embodiment of this application;
FIG. 18 is a diagram of structures of two light homogenization layers according to an embodiment of this application;
FIG. 19 is a diagram of structures of two other light homogenization layers according to an embodiment of this application;
FIG. 20 is a diagram of a structure of another light homogenization layer according to an embodiment of this application;
FIG. 21 is a diagram of a structure of an anti-glare layer according to an embodiment of this application;
FIG. 22 is a diagram of a display apparatus according to an embodiment of this application;
FIG. 23 is a diagram of another display apparatus according to an embodiment of this application;
FIG. 24 is a diagram of another display apparatus according to an embodiment of this application;
FIG. 25 is a diagram of another display apparatus according to an embodiment of this application; and
FIG. 26 is a diagram of a display device according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms such as "first" and "second", below are merely for ease of description, and cannot be construed as indicating or implying relative importance or implicitly indicating a quantity of indicated technical features. Therefore, a feature limited by "first", "second", or the like may explicitly or implicitly include one or more features. In descriptions of this application, unless otherwise stated, "a plurality of" means two or more than two. For example, a plurality of processing units means two or more processing units.

In addition, in embodiments of this application, "up" and "down" are not limited to definitions relative to directions in which components are schematically placed in the accompanying drawings. It should be understood that these directional terms may be relative concepts used for relative description and clarification, and may change correspondingly based on a change of directions in which the components in the accompanying drawings are placed. In the accompanying drawings, for clarity, thicknesses of layers and areas are exaggerated, and a size proportion relationship between parts in the figures does not reflect an actual size proportion relationship.

In embodiments of this application, unless otherwise explicitly specified and limited, the term "connection" should be understood in a broad sense. For example, the "connection" may be a fixed connection, a detachable connection, or an integrated connection. Alternatively, the "connection" may be a direct connection or an indirect connection through an intermediate medium.

In embodiments of this application, the term "module" is usually a functional structure divided based on logic, and the "module" may be implemented by pure hardware, or may be implemented by a combination of software and hardware. In embodiments of this application, the term "and/or" describes an association relationship between associated objects and indicates that three relationships may exist. For example, A and/or B may indicate the following three cases: Only A exists, only B exists, and both A and B exist.

In embodiments of this application, the term such as "example" or "for example" is used to represent giving an example, an illustration, or a description. Any embodiment or design scheme described as an "example" or "for example" in embodiments of this application shall not be explained as being more preferred or having more advantages than another embodiment or design scheme. Exactly, use of the term such as "example" or "for example" is intended to present a relative concept in a specific manner.

The solutions provided in embodiments of this application may be applied to an electronic device, for example, a mobile phone (mobile phone), a personal computer (personal computer, PC), a tablet computer (pad), an intelligent wearable product (for example, a smartwatch or a smart band), a virtual reality (virtual reality, VR) terminal device, an augmented reality (augmented reality, AR) terminal device, a vehicle-mounted terminal, or a display, or any electronic device that needs to be configured with a button. A specific form of the electronic device is not specially limited in embodiments of this application.

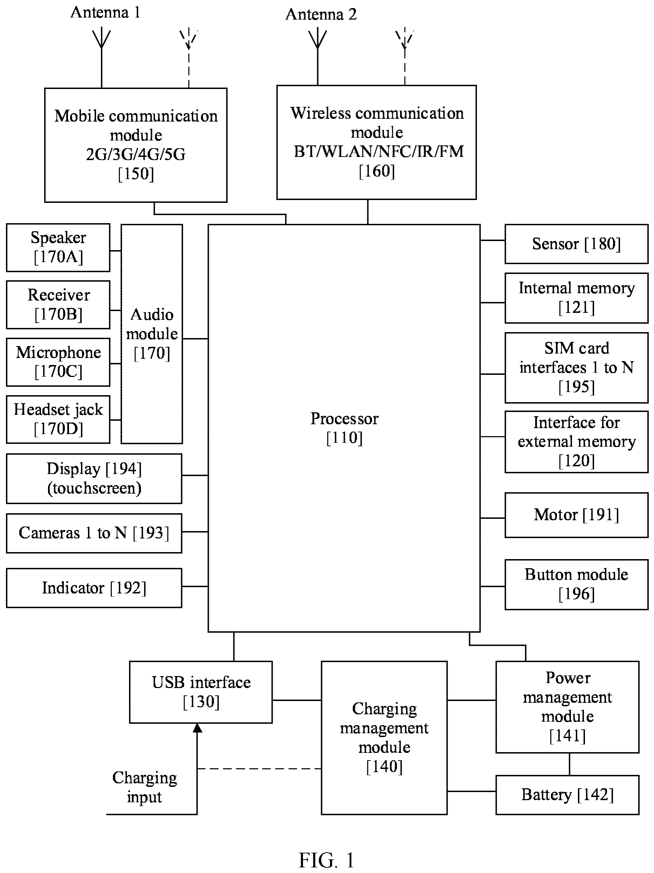

An example in which the electronic device is a mobile phone is used for description. FIG. 1 is a diagram of a structure of an electronic device according to an embodiment of this application. Refer to FIG. 1. The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor 180, a motor 191, an indicator 192, a camera 193, a display apparatus 194, a subscriber identity module (subscriber identity module, SIM) card interface 195, a button module 196, and the like.

It may be understood that the structure illustrated in this embodiment does not constitute a specific limitation on the electronic device. In some other embodiments, the electronic device may include more or fewer components than those shown in the figure, or a combination of some components, or splits from some components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache. The memory may store instructions or data that just used or cyclically used by the processor 110. If the processor 110 needs to use the instructions or the data again, the processor may directly invoke the instructions or the data from the memory. This avoids repeated access, and reduces waiting time of the processor 110, to improve system efficiency.

It may be understood that an interface connection relationship between the modules that is shown in this embodiment is merely an example for description, and does not constitute a limitation on the structure of the electronic device. In some other embodiments, the electronic device may alternatively use an interface connection manner different from that in the foregoing embodiment, or use a combination of a plurality of interface connection manners.

The display apparatus 194 is configured to display a text, an image, a video, and the like. As a main I/O device, the display apparatus 194 plays an irreplaceable role in daily use and an office scenario. For example, the display apparatus is provided on a mobile phone, a tablet computer, a personal computer, a television, an intelligent wearable device, or another electronic device that requires human-computer interaction, and is configured to display information. Alternatively, the display apparatus may further have a touch function, and is also referred to as a touchscreen or a touch screen. The touchscreen may obtain an operation instruction of a user in response to an operation of the user.

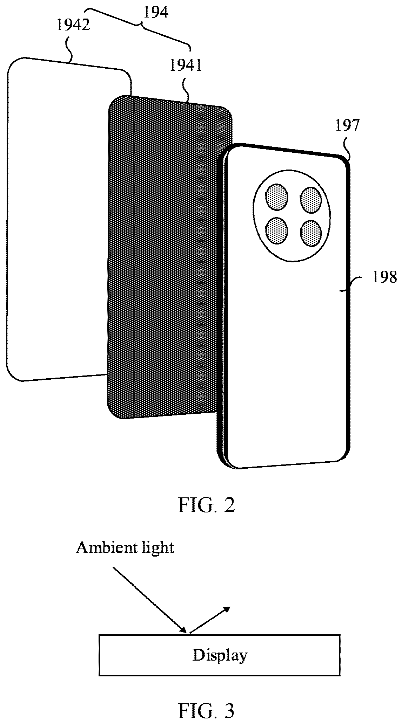

FIG. 2 is a diagram of an assembly structure of an electronic device. The electronic device includes a display apparatus 194, a middle frame 197, and a rear cover 198. The display apparatus 194 and the rear cover 198 are respectively disposed on two sides of the middle frame 197, and are fastened and bonded to the middle frame 197. A structure of the display apparatus 194 mainly includes a display panel (panel) 1941 and a cover 1942. The cover 1942 and the display panel 1941 are stacked, and the cover 1942 is located on a light-emitting side of the display panel 1941 and is connected to the display panel 1941. For example, the cover 1942 may be bonded to the display panel 1941.

Herein, a material of the cover 1942 may be, for example, glass or transparent resin. When the material of the cover 1942 is glass, the cover 1942 may also be referred to as a glass cover or cover glass.

It should be noted that the display panel 1941 may be a liquid crystal display (liquid crystal display, LCD) panel, or may be a self-luminous display panel. When the display panel 1941 is a self-luminous display panel, the display panel 1941 may be, for example, an organic light-emitting diode (organic light-emitting diode, OLED) display panel or a quantum dot light-emitting diode (quantum dot light-emitting diode, QLED) display panel. When the display panel 1941 is a liquid crystal display panel, the display apparatus 194 may be referred to as a liquid crystal display apparatus. When the display panel 1941 is a self-luminous display panel, the display apparatus 194 may be referred to as a self-luminous display apparatus.

The display apparatus displays an image or information by using a plurality of pixels. The display panel includes the plurality of pixels, each pixel displays a color of the pixel, and colors displayed by the plurality of pixels are combined into a displayed image. Generally, each pixel includes three sub-pixels: red (red), green (green), and blue (blue). Each pixel displays a color by adjusting a color ratio between the three sub-pixels: red, green, and blue. Finally, all pixels are spliced into the displayed image.

Currently, a display apparatus that is widely used in an electronic device includes a liquid crystal display (liquid crystal display, LCD), an organic light-emitting diode (organic light-emitting diode, OLED), or the like. A light emitting principle of the LCD mainly depends on a backlight layer. The backlight layer emits white light, and there is a color film on the backlight layer. After the white light passes through the film, a color light can be displayed. A liquid crystal layer is provided between the backlight layer and the colored film. A ratio between red, blue, and green is adjusted to display different colors. The OLED uses an organic light-emitting material. Each pixel can emit light, in other words, can self-illuminate with no need for the backlight layer and the liquid crystal layer in the LCD. Therefore, the display apparatus can be lighter and thinner, has lower power consumption, has a wide range of application scenarios, and can implement special functions such as an in-screen fingerprint and a flexible screen.

A main function of the display apparatus is to effectively display information, which expands a series of technical development directions. For example, for a mobile phone, a higher resolution (>400 ppi) and a richer color display capability (>95% DCI-P3), and lower power consumption (>20 hours of a video playing battery life) become mainstream pursuit of display technologies.

In addition to quality of a screen of the display apparatus, design strategies of different electronic devices emerge for application scenarios. For example, when a privacy protection function is emphasized, a film layer whose light transmittance can change with a viewing angle is additionally mounted on the screen of the display apparatus, so that a screen with a screen privacy effect can be obtained.

Nowadays, in a scenario of using an increasing quantity of display apparatuses, consumers start to pay attention to damage impact of the display apparatus on human eyes, and reducing visual fatigue or discomfort caused by viewing the screen of the display apparatus by naked eyes becomes one of mainstream design directions of an advanced display apparatus. The mainstream design directions include a series of display apparatus designs such as low blue light, no flicker, low reflection, and anti-glare.

Refer to FIG. 3. Glare means glare effect generated by a screen of a display apparatus due to specular reflection of ambient light. For a point light source (for example, light or daylight) in daily life, brightness of the point light source is high, and the point light source is not suitable for direct viewing by human eyes. However, when a user uses a device having a display apparatus, for example, a mobile phone, and uses the mobile phone in sunlight, a screen of the mobile phone reflects sunlight, which causes discomfort to eyes of the user, and further, the user cannot clearly view information displayed on the screen of the mobile phone; or when the user uses the mobile phone in a light environment, the screen of the mobile phone reflects light, and a bright spot is formed on the screen, affecting normal use of the user. Glare makes it more difficult for the user to clearly view content displayed on the screen, and may even cause discomfort to eyes of the user, affecting vision of the user. Therefore, an anti-glare (anti-glare, AG) technology becomes an important research direction of a display technology.

As described in the foregoing example, glare is caused by specular reflection of ambient light on the screen. Therefore, an idea of anti-glare is to avoid specular reflection, for example, increase roughness of the screen. In this way, light irradiated on the screen is not prone to form specular reflection, thereby avoiding glare.

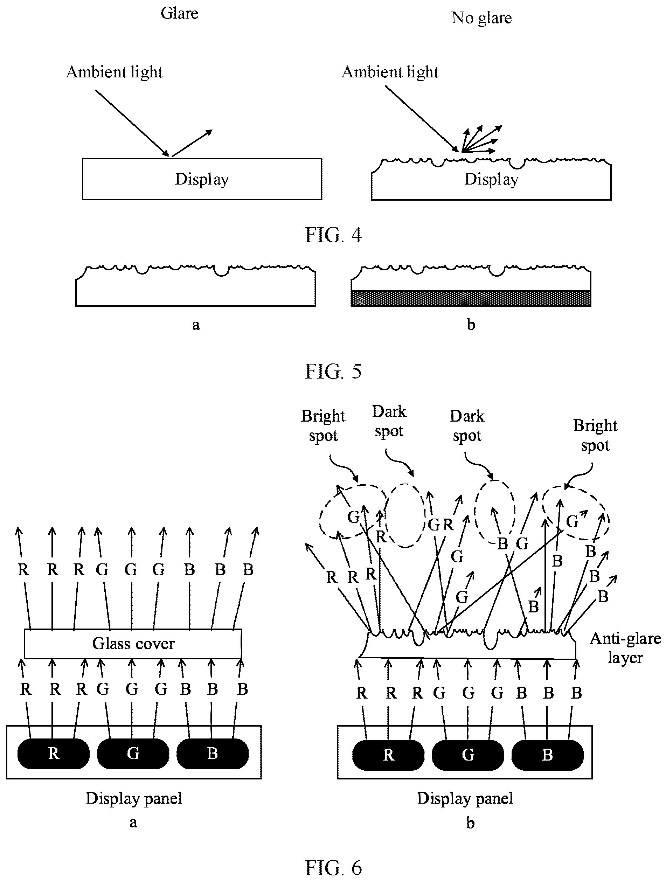

For example, refer to FIG. 4. "Roughening" is performed on a cover or a film layer on a surface of the screen to form an anti-glare structure, so that a reflective surface (a flat mirror surface) of the screen becomes a non-reflective matt surface (an uneven and rough surface). Compared with a common screen, the screen has a lower reflection ratio. When ambient light is irradiated on the screen, diffuse reflection occurs, to avoid specular reflection. In this way, glare can be avoided.

An anti-glare capability of the screen may be measured by using an anti-glare value. The anti-glare value is also referred to as a bidirectional reflection distribution function (Bidirectional Reflectance Distribution Function, BRDF), and describes how incident light is distributed in emergent directions after being reflected by a surface. This may also be understood as that after light is incident on a surface from a direction, energy is absorbed by the surface, and then is emitted in various directions, and therefore may be used to describe an anti-glare degree of the surface. The anti-glare value is measured in 1/solid angle or sr⁻¹. The anti-glare value means attenuation of a value at a 1° angle compared with a value at a 0° angle (positive viewing view). For example, BRDF (0°)=a, and BRDF (1°)=b. In this case, anti-glare value=(a-b)/a.

The surface of the screen is usually of a glass cover or a film layer structure. FIG. 5 is a diagram of an anti-glare cover. The anti-glare cover shown in a diagram a in FIG. 5 is a glass cover. An uneven microstructure appearance is formed on a surface of the glass cover through chemical etching or by spraying an anti-glare material, and is referred to as an anti-glare structure. The uneven microstructure appearance usually appears in an irregular arrangement form, so that light incident on the surface of the cover is diffusely reflected, to avoid glare.

The anti-glare cover shown in the diagram a in FIG. 5 is a single glass cover, and a diagram b in FIG. 5 is a diagram of another anti-glare cover. The anti-glare cover shown in the diagram b in FIG. 5 is a composite cover, and the composite cover is formed by combining two different materials such as polymethyl methacrylate and polycarbonate (PMMA+PC) through hot pressing based on a thermoplastic material, and preparing an uneven microstructure appearance on one side through nano-imprinting or in another manner. The uneven microstructure appearance usually appears in an irregular arrangement form, so that light incident on the surface of the cover is diffusely reflected, to avoid glare.

In some other possible implementations, anti-glare of the display apparatus may alternatively be implemented by attaching an additional anti-glare film layer (for example, a frosted texture protective film) to the surface of the screen. A principle of the anti-glare film layer is basically the same as that of the anti-glare cover, and the anti-glare film layer and the anti-glare cover each form an uneven microstructure appearance on the surface to avoid glare. A difference between the anti-glare film layer and the anti-glare cover lies in that an anti-glare film is usually disposed at an outermost layer of a screen structure, and may be attached for use based on a requirement. In general, the anti-glare cover or the anti-glare film layer forms the uneven microstructure appearance on the surface, so that diffuse reflection can occur when ambient light is incident, to avoid glare.

According to technical requirements, conditions for implementing anti-glare include light management for light emitted by the screen and ambient light management after screen reflection. A main function of the anti-glare cover and the anti-glare film is to perform scattering by using the uneven microstructure appearance on the surface, to implementing diffuse reflection when ambient light is incident. However, this type of anti-glare structure also causes scattering of light emitted by the display panel, and consequently, an uneven light crosstalk phenomenon occurs between light of different subpixels, causing a visual sparkle problem.

A sparkle means that light emitted by the display panel is scattered on a surface of an anti-glare layer when light emitted by a pixel passes through the anti-glare layer, and interference occurs between light scattered at different locations, to generate color point or bright/dark point effect when the light is viewed by human eyes, affecting display effect.

A diagram a in FIG. 6 is a diagram in which light emitted by the display panel reaches human eyes through the glass cover when a surface of the glass cover on the display apparatus is smooth, in other words, there is no anti-glare layer. Generally, it may be considered that an image displayed in the display apparatus includes a large quantity of pixels. For example, it may be considered that an image with a resolution of 1920×1080 includes 1920 pixels in each row and 1080 pixels in each column, each pixel further includes three subpixels, and the three subpixels are respectively a red subpixel R, a green subpixel G, and a blue subpixel B. The three subpixels respectively display light of three colors: red, green, and blue.

It can be learned from the diagram a in FIG. 6 that amounts of light transmitted through the glass cover by light generated by the red subpixel R, the green subpixel G, and the blue subpixel B in each pixel in the display apparatus are consistent when there is no anti-glare layer in the display apparatus, so that amounts of light of different colors that finally reaches the human eyes are consistent. For example, the human eyes view normally white light when transmittance amounts of light generated by the red subpixel R, the green subpixel G, and the blue subpixel B are consistent.

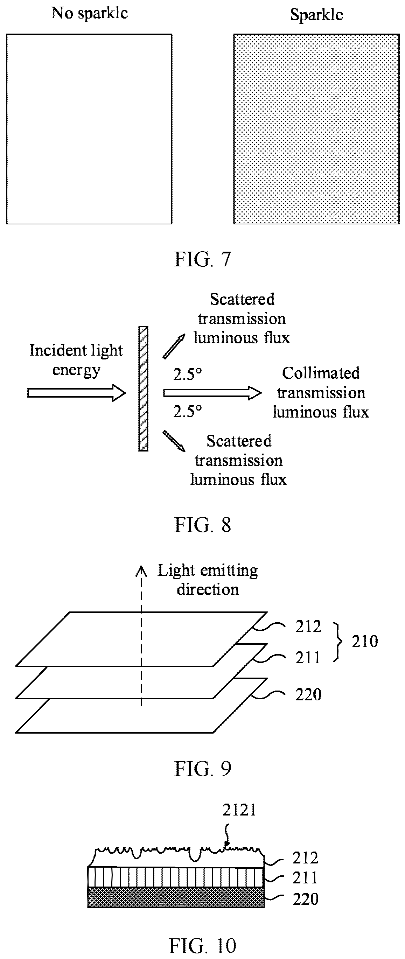

When the display apparatus is provided with the anti-glare layer, as shown in a diagram b in FIG. 6, light generated by the red subpixel R, the green subpixel G, and the blue subpixel B in each pixel unit in the display apparatus passes through the anti-glare layer, because there is an uneven anti-glare structure on a surface of the anti-glare layer, crosstalk occurs between red light emitted by the red subpixel R, green light emitted by the green subpixel G, and blue light emitted by the blue subpixel B. Consequently, amounts of light of different colors that finally reach a field of view of the user are heterogeneous, and crosstalk occurs between the light of different colors. For example, a large quantity of red, blue, and green light passes through an area, and then a white bright spot is generated; a small quantity of light passes through an area, and then a dark spot is generated; and there is a large amount of red light in an area, and then a reddish bright spot is generated. The mixed brightness and darkness phenomenon is a sparkle phenomenon. FIG. 7 is a diagram of a sparkle displayed on a screen. The sparkle on the screen affects display quality and visual effect. Therefore, in an anti-glare technology, focus needs to be put on reducing or eliminating glare effect generated by the screen due to specular reflection of ambient light. In addition, because the anti-glare technology also directly affects performance (such as definition and a sparkle) of an image on the screen, management of reflection of the ambient light and management of light emitted by pixels need to be considered during development of the anti-glare technology.

To resolve the sparkle problem, a haze parameter of the anti-glare layer is usually controlled in a preparation process of the anti-glare layer of the screen. Refer to FIG. 8. Haze describes one of physical properties of emergent light after light passes through a medium and is scattered, and is defined as a percentage of intensity of transmitted light that deviates from incident light by more than a 2.5° angle to total intensity of transmitted light. Higher haze indicates lower definition.

The haze parameter of the anti-glare layer is controlled, so that light emitted by a display panel can have homogeneous light mixture effect to some extent, and therefore sparkle effect can be alleviated. However, display definition is reduced in this manner. For example, with reference to Table 1, Table 1 shows states of the sparkle and definition at different haze levels.

**Table 1**

| Haze | Low haze | Medium haze | High haze |
|---|---|---|---|
| Sparkle | Clear and visible | Clear and visible | Weak |
| Definition | Slight decrease | Significant decrease | Severe decrease |

It can be learned from Table 1 that the sparkle can be suppressed when the haze is increased, but the definition is also decreased significantly when the haze is increased. If impact of the sparkle needs to be reduced by using the high haze, the definition is decreased significantly. In conclusion, to avoid glare, in a possible implementation, the anti-glare layer is disposed in the screen. The anti-glare layer can enable ambient light to be scattered on the surface of the screen, to avoid glare. However, the anti-glare structure also scatters light emitted by the display panel. As a result, after light emitted by different pixels is scattered by the anti-glare layer, an obvious light crosstalk phenomenon is highlighted, causing display of the sparkle. However, to suppress the sparkle on the screen, the haze parameter of the anti-glare layer is usually increased, but an increase in the haze parameter of the anti-glare layer causes a decrease in the display definition of the screen. Therefore, a current anti-glare solution cannot meet requirements of a low sparkle and high definition.

To resolve the foregoing problems, embodiments of this application provide a new optical module. The anti-glare layer provided in the foregoing examples causes the sparkle on the screen because the uneven structure on the surface of the anti-glare layer has prominent scattering directivity, and the obvious light crosstalk phenomenon is highlighted after the light emitted by the display panel is scattered by the anti-glare layer, causing display of the sparkle on the screen. To suppress the sparkle on the screen, in embodiments of this application, a light homogenization layer, followed by an anti-glare layer through which light emitted by a display panel passes, is added. The light emitted by the display panel first passes through the light homogenization layer and then passes through the anti-glare layer, so that a homogenized light pattern no longer has obvious directivity at a larger angle. In this way, scattering effect of the anti-glare layer cannot cause the obvious light crosstalk phenomenon, the sparkle on the screen can be better suppressed, and there is no need to increase the haze to suppress the sparkle. Therefore, imaging definition can also be ensured.

FIG. 9 is a diagram of an optical module according to an embodiment of this application. The optical module is used in a display apparatus. The display apparatus includes a display panel 220. The optical module 210 includes a light homogenization layer 211 and an anti-glare layer 212 that are sequentially disposed in a light emitting direction of the display panel 220.

For example, the light homogenization layer 211 and the anti-glare layer 212 that are sequentially disposed in the light emitting direction of the display panel 220 provided in this embodiment of this application are merely used to limit a relative location relationship between the display panel 220, the light homogenization layer 211, and the anti-glare layer 212, and do not mean that the display panel 220, the light homogenization layer 211, and the anti-glare layer 212 need to be adjacent to each other. For example, for the display panel 220, the light homogenization layer 211, and the anti-glare layer 212, the light homogenization layer 211 may be in contact with the display panel 211, and the anti-glare layer 212 may be in contact with the light homogenization layer 211. Alternatively, another layer (for example, a polarizer) may be provided between the display panel 220 and the light homogenization layer 211, or another layer may be provided between the light homogenization layer 211 and the anti-glare layer 212.

Refer to FIG. 10. There is an uneven anti-glare structure 2121 on a surface of the anti-glare layer 212 in a light emergent direction, so that ambient light is scattered. This avoids glare caused by specular reflection of the ambient light. Because the anti-glare layer 212 further scatters light emitted by the display panel 220, causing a sparkle on a screen, the optical module 210 provided in this embodiment of this application is provided with the light homogenization layer 211. The light homogenization layer 211 is configured to homogeneously mix the light emitted by the display panel 220 before the light enters the anti-glare layer 212, so that a scattered light pattern is more homogeneous, and has no obvious directivity. In this way, the sparkle is not generated when homogeneously mixed light passes through the anti-glare layer 212.

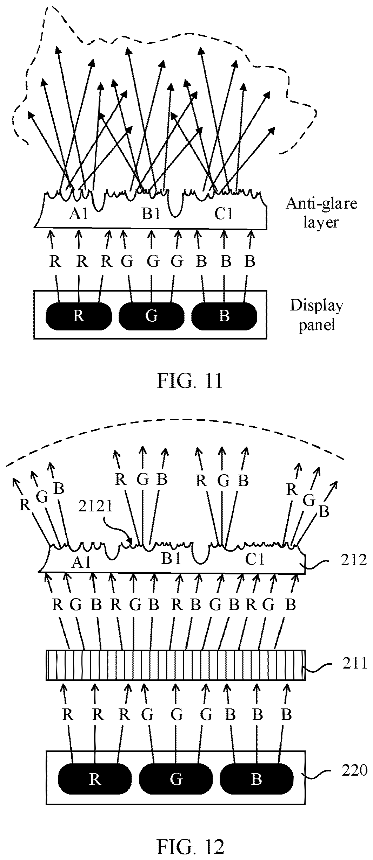

As shown in FIG. 11, when no light homogenization layer is disposed, light homogenization effect is poor due to more prominent scattering directivity of anti-glare layer 212. For example, light emitted by a red subpixel R is incident on an area A1 at the anti-glare layer, light emitted by a green subpixel G is incident on an area B1 at the anti-glare layer, and light emitted by a blue subpixel B is incident on an area C1 at the anti-glare layer. The anti-glare layer scatters red light in the A1 area, green light in the B1 area, and blue light in the C1 area. Because the light emitted by the red subpixel, the green subpixel, and the blue subpixel is not homogenized, and has respective directivity, after such light is scattered by the anti-glare layer, crosstalk occurs between light emitted by different pixels, causing a serious sparkle problem.

However, in this embodiment of this application, the light homogenization layer 211 is disposed before the anti-glare layer 212, and the light emitted by the display panel 220 is homogeneously mixed by the light homogenization layer 211 before being incident on the anti-glare layer 212, so that the scattered light pattern is more homogeneous. For example, the light emitted by the red subpixel R reaches the area A1 and the area B1 at the anti-glare layer after being homogenized by the light homogenization layer 211; the light emitted by the green subpixel G reaches the area A1, the area B1, and the area C1 at the anti-glare layer after being homogenized by the light homogenization layer 211; and the light emitted by the blue subpixel B reaches the area B1 and the area C1 at the anti-glare layer after being homogenized by the light homogenization layer 211. After passing through the light homogenization layer 211, the light emitted by the pixels on the display panel 220 is mixed together, and no longer has obvious directivity. In this way, generation of the sparkle can be suppressed when the anti-glare layer 212 scatters homogenized light.

As mentioned in the foregoing example, the sparkle is generated because light crosstalk occurs after light of different colors emitted by the display panel is scattered by the anti-glare layer. For example, crosstalk occurs between red light emitted by the red subpixel and green light emitted by the green pixel, and crosstalk occurs between the green light emitted by the green pixel and blue light emitted by the blue pixel. With reference to FIG. 11, the light emitted by the red subpixel R is incident in the area A1 at the anti-glare layer 211; the light emitted by the green subpixel G reaches the area B1 at the anti-glare layer, and the light emitted by the blue subpixel B is incident in the area C1 at the anti-glare layer. The red light is scattered when passing through the area A1 at the anti-glare layer, the green light is scattered when passing through the area B1 at the anti-glare layer, and the blue light is scattered when passing through the area C1 at the anti-glare layer. Scattering has no obvious directivity, and therefore crosstalk occurs after light of different colors is scattered by the anti-glare layer, causing generation of the sparkle on the screen.

Refer to FIG. 12. In the solution provided in this embodiment of this application, the light homogenization layer 211 is disposed before the anti-glare layer 212, and the light homogenization layer 211 may perform homogenization on the light emitted by the display panel 220, so that a light pattern is more homogeneous before the light emitted by the display panel 220 is incident on the anti-glare layer 212. For example, FIG. 12 is used as an example. The light emitted by the red subpixel R, the green subpixel G, and the blue subpixel B is homogeneously mixed after passing through the light homogenization layer, and emergent light is similar to white light formed by homogeneously mixing red, green, and blue light. When the light homogenization layer 211 is disposed, the light incident on the area A1 at the anti-glare layer 212 includes homogeneously mixed red, green, and blue light; and the light incident on the area B1 at the anti-glare layer 212 also includes homogeneously mixed red, green, and blue light. In this way, when the light emitted by the display panel 220 is incident on the anti-glare layer 212 and is scattered by the anti-glare structure 2121, no single light is scattered, but a plurality of types of homogenized light are scattered, and the scattered light is still a mixture of the plurality of types of light. Therefore, generation of the sparkle can be suppressed.

For example, when no light homogenization layer is disposed, the green light passes through the anti-glare layer and is scattered, and then crosstalk occurs between the green light and the red light. However, when the light homogenization layer 211 is disposed, green light, red light, and light of another color that are scattered to a same location are increased, and therefore no obvious sparkle problem occurs. Due to existence of the light homogenization layer 211, an emergent range of incident light is larger after the incident light passes through the light homogenization layer 211, and a more homogenized light pattern can be presented, so that the homogenized light pattern no longer has obvious directivity at a larger angle. In this way, scattering effect of the anti-glare layer 212 cannot cause an obvious light crosstalk phenomenon, and therefore the sparkle on the screen can be better suppressed.

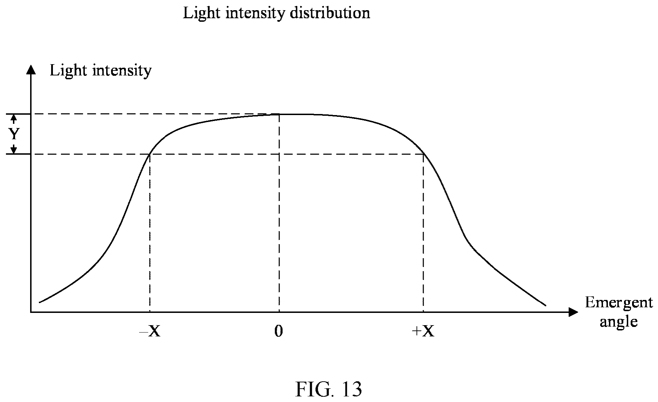

To ensure that light can be homogeneously mixed before the light is incident on the anti-glare layer 212, light intensity distribution of emergent light generated by the light homogenization layer 211 provided in this embodiment of this application when collimated light is vertically incident meets that light intensity attenuation is less than or equal to a threshold in a specified emergent angle range. For example, with reference to FIG. 13, FIG. 13 is a diagram of light intensity distribution of emergent light of a light homogenization layer according to an embodiment of this application. Light intensity distribution of emergent light generated when collimated light is vertically incident on the light homogenization layer requires that light intensity attenuation be less than or equal to Y in an emergent angle X range.

For example, X ranges from (-2° to +2°) to (-60° to +60°), and a value of Y ranges from 0 to 30%. This means that intensity attenuation of the emergent light generated when the collimated light is vertically incident on the light homogenization layer is less than or equal to 30% in an emergent angle ranging from (-2° to +2°) to (-60° to +60°). In this way, after passing through the light homogenization layer, the light has a larger emergent angle, and light emitted by different pixels can be homogeneously mixed after passing through the light homogenization layer.

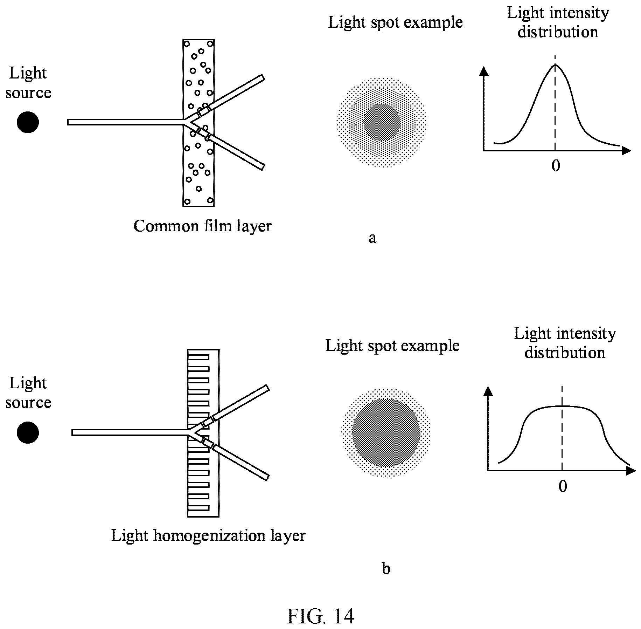

FIG. 14 is a diagram of comparison between light intensity of emergent light of a common film layer and that of the light homogenization layer provided in this embodiment of this application. It can be learned from a diagram a in FIG. 14 that the emergent light of the common film layer has obvious directivity. To be specific, the light intensity of the emergent light is concentrated near an incident direction (an emergent angle is 0), or the light intensity of the emergent light has an obviously higher peak value in an incident direction, a light spot range of the emergent light is smaller. As shown in a diagram b in FIG. 14, the light homogenization layer provided in this embodiment of this application has obvious light homogenization effect, a large emergent angle, and small light intensity attenuation, and high light intensity can be maintained in a large emergent angle, and a light spot range of emergent light is larger. In this way, light spots obtained after light of different colors emitted by different sub-pixels on the display panel passes through the light homogenization layer intersect, and different light can be homogeneously mixed without obvious directivity. When homogeneously mixed light passes through the anti-glare layer again, generation of the sparkle on the screen can be suppressed.

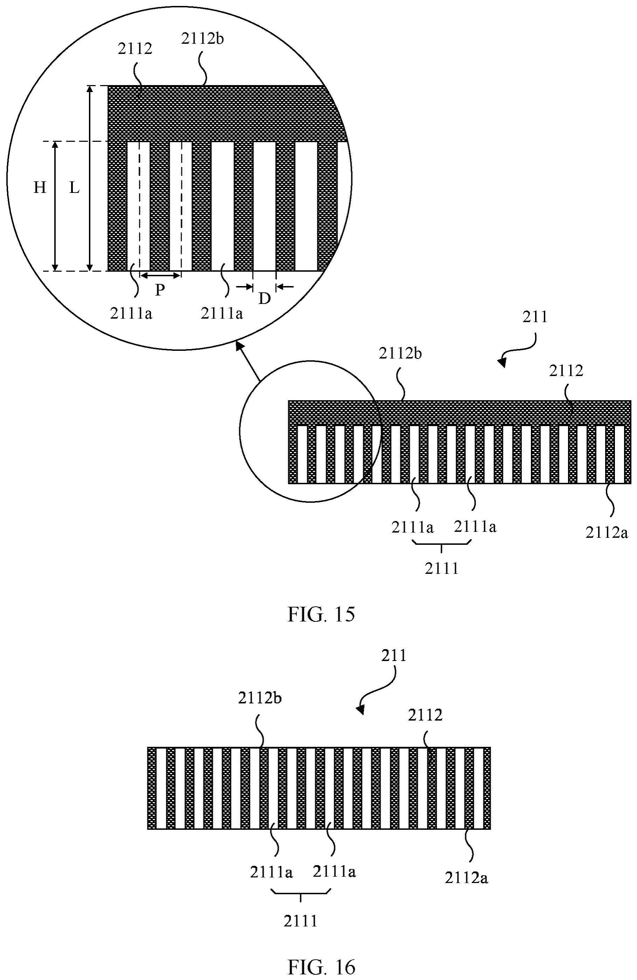

FIG. 15 is a diagram of the light homogenization layer. In this embodiment of this application, FIG. 15 is a cross-sectional view of the light homogenization layer in a normal direction. The light homogenization layer 211 includes a filling layer 2112 and a grating 2111 embedded into the filling layer 2112. The filling layer 2112 may be made of a resin material. The filling layer 2112 includes a first surface 2112a and a second surface 2112b. The grating 211 includes a plurality of columnar structures 2111a. The columnar structures 2111a may be periodically arranged. In this embodiment of this application, an arrangement period of the columnar structures 2111a is defined as a distance between centers of two adjacent columnar structures 2111a, which is denoted as P. A feature size of the columnar structure 2111a is denoted as D, where a value of D ranges from 1 µm to 25 µm. The arrangement period of the columnar structures 2111a and the feature size of the columnar structure 2111a meet: 3D≥P>D. For example, when a cross section of the columnar structure 2111a is a circle, the feature size D of the columnar structure 2111a is a diameter of the circle; or when a cross section of the columnar structure 2111a is a square, the feature size D of the columnar structure 2111a is a side length of the square; or when a cross section of the columnar structure 2111a is a rectangle, the feature size D of the columnar structure 2111a is a diameter of an externally tangent circle of the rectangle.

A bottom surface of the columnar structure 2111a is flush with the first surface 2112a of the filling layer 2112, and a height H of the columnar structure 2111a is less than or equal to a thickness L of the light homogenization layer 211. For example, with reference to FIG. 15, the thickness of the light homogenization layer 211 is a thickness of the filling layer 2112, and the thickness of the filling layer 2112 is a distance between the first surface 2112a and the second surface 2112b. For example, a refractive index of the grating 2111 is n1, a refractive index of the filling layer 2112 is n2, and the refractive index of the grating 2111 and the refractive index of the filling layer 2112 meet: |n1-n2|>0.005.

The bottom surface of the columnar structure 2111a is flush with the first surface 2112a of the filling layer 2112, and the cross section of the columnar structure 2111a may be a circle, a rectangle, a square, or the like. The height of the columnar structure 2111a is less than or equal to the thickness of the filling layer 2112. When the height of the columnar structure 2111a is less than the thickness of the filling layer 2112, it may be considered that the grating 2111 is embedded into the filling layer 2112. In this case, in an actual use process, the grating 2111 of the light homogenization layer 211 (or the first surface 2112a of the filling layer 2112) is located on a side close to a light source (namely, the display panel). In addition, the refractive index n1 of the grating 2111 is greater than the refractive index n2 of the filling layer 2112. In a possible implementation, the refractive index n1 of the grating 2111 and the refractive index n2 of the filling layer 2112 meet: n1-n2>0.005.

When the height of the columnar structure 2111a is equal to the thickness of the filling layer 2112, refer to FIG. 16. FIG. 16 is a cross-sectional view of the light homogenization layer in a normal direction. It may be considered that the grating 2111 is embedded into the filling layer 2112 and penetrates the filling layer 2112. In this case, a lower surface of the columnar structure 2111a is flush with the first surface 2112a of the filling layer 2112, and an upper surface of the columnar structure 2111a is flush with the second surface 2112b of the filling layer 2112. Therefore, such the light homogenization layer 211 has no direction, and any side (for example, the first surface 2112a or the second surface 2112b of the filling layer 2112) facing the display panel can implement homogeneous light mixture effect.

In a possible implementation, the thickness L of the light homogenization layer 211 is less than or equal to 150 µm, in other words, the thickness of the filling layer 2112 is less than or equal to 150 µm. Correspondingly, the height of the columnar structure 2111a in the grating 2111 is less than or equal to 150 µm.

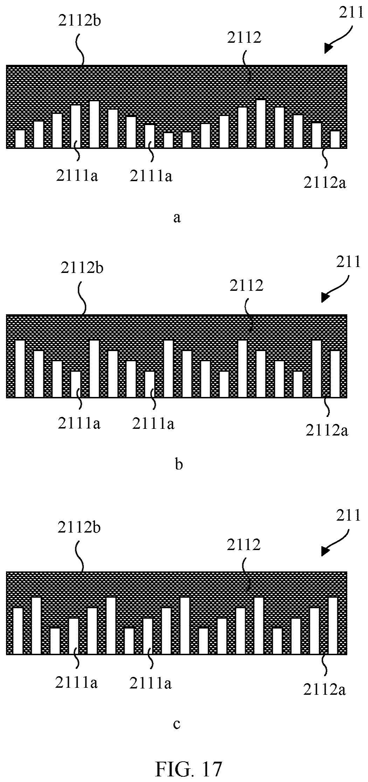

In the light homogenization layers 211 shown in FIG. 15 and FIG. 16, the plurality of columnar structures 2111a in the grating 2111 have a same size and height. In some other possible implementations, for example, with reference to FIG. 17, heights of the plurality of columnar structures 2111a in the grating 2111 may be different. A diagram a, a diagram b, and a diagram c in FIG. 17 are diagrams of several different light homogenization layers 211. Columnar structures 2111a in the grating 2111 may have different heights, and the columnar structures 2111a of different heights are periodically arranged. In this case, the plurality of columnar structures 2111a of different heights may also be periodically arranged as a whole. Herein, an arrangement period of the plurality of columnar structures 2111a of different heights is denoted as N. For example, a period P is a distance between two adjacent columnar structures 2111a, and the period N herein is a distance between the plurality of columnar structures 2111a that are periodically arranged. For example, the diagram b in FIG. 17 is used as an example. If four columnar structures 2111a of different heights are periodically arranged, T=4P.

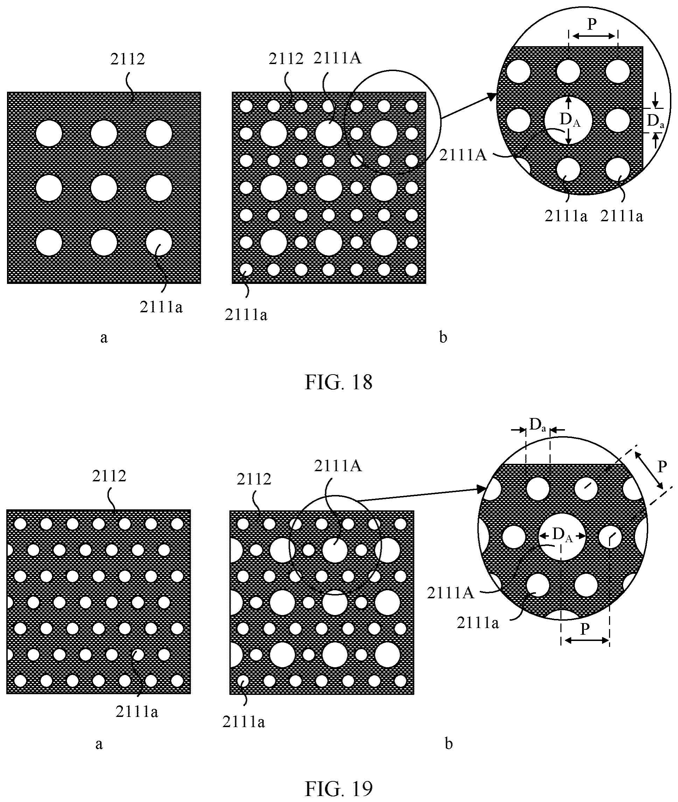

In addition, sizes of the plurality of columnar structures 2111a in the grating 2111 may be different. FIG. 18 is a cross-sectional view of a light homogenization layer in a direction perpendicular to a normal direction. A diagram a in FIG. 18 is a diagram of a light homogenization layer 211. In the light homogenization layer 211 shown in the diagram a in FIG. 18, columnar structures 2111a in a grating 2111 are arranged in a cross-orthogonal manner, and the columnar structures 2111a have a same feature size. Based on the diagram a in FIG. 18, a diagram b in FIG. 18 is a diagram of another light homogenization layer 211. In the light homogenization layer 211 shown in the diagram b in FIG. 18, a grating 2111 includes columnar structures 2111a and columnar structures 2111A that separately have different feature sizes and that are still arranged in a cross-orthogonal manner. A feature size of the columnar structure 2111a is Dₐ, a feature size of the columnar structure 2111A is D_{A}, a plurality of columnar structures 2111a are disposed around the columnar structures 2111A, and at least one columnar structure 2111a may be equally spaced between any two columnar structures 2111A. An arrangement period P between the columnar structures 2111A and the columnar structures 2111a meets 3D≥P>D, where D may be an average value of the feature sizes of the columnar structure 2111A and the columnar structure 2111a.

FIG. 19 is a cross-sectional view of a light homogenization layer in a direction perpendicular to a normal direction. A diagram a in FIG. 19 is a diagram of a light homogenization layer 211. In the light homogenization layer 211 shown in the diagram a in FIG. 19, columnar structures in a grating 2111 are arranged in a regular hexagon shape, and the columnar structures have a same feature size. Based on the diagram a in FIG. 19, a diagram b in FIG. 19 is a diagram of another light homogenization layer 211. In the light homogenization layer 211 shown in the diagram b in FIG. 19, columnar structures in a grating 2111 have different feature sizes, and are still arranged in the regular hexagon shape. A feature size of the columnar structure 2111a is Dₐ, a feature size of the columnar structure 2111A is D_{A}, a plurality of columnar structures 2111a are disposed around the columnar structures 2111A, and at least one columnar structure 2111a may be equally spaced between any two columnar structures 2111A. An arrangement period P between the columnar structures 2111A and the columnar structures 2111a meets 3D≥P>D, where D may be an average value of the feature sizes of the columnar structure 2111A and the columnar structure 2111a.

In the foregoing examples, the grating 2111 is periodically arranged, and the columnar structures in the grating 2111 may have a same feature size and height, or may have a same feature size and different heights, or may have different feature sizes and a same height, or may have different feature sizes and different heights.

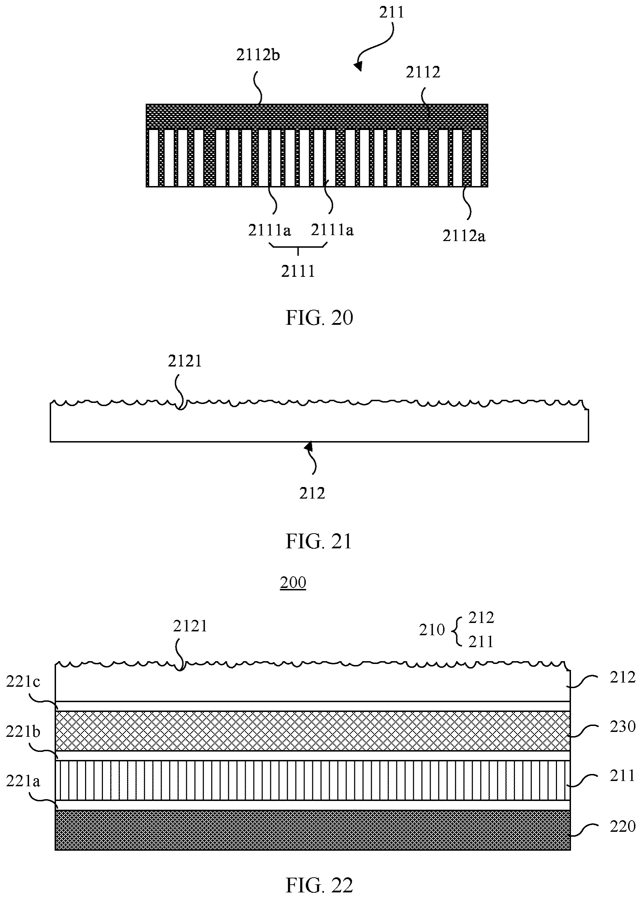

In addition, in some other possible implementations, the columnar structures in the grating 2111 may alternatively be aperiodically arranged. Based on FIG. 15, FIG. 20 is a diagram of another light homogenization layer 211, columnar structures in a grating 2111 may be aperiodically arranged, but a thickness of the light homogenization layer 211 still needs to be less than or equal to 150 µm, and a height of the columnar structure in the grating 2111 needs to be less than or equal to the thickness of the light homogenization layer 211. A feature size of the columnar structure ranges from 1 µm to 25 µm, and a distance between two adjacent columnar structures and the feature size of the columnar structure meet: 3D≥P>D.

For example, after light is homogenized by the light homogenization layer 211 including an aperiodic grating structure, light patterns are distributed more homogeneously, and light intensity attenuation of emergent light in each direction or at each angle is smaller. However, the light homogenization layer 211 including the periodic grating structure has better controllability of homogenizing light. In this case, distribution of homogenized light patterns at a light exit angle may be controlled by designing a size of the grating structure or the like.

The foregoing examples are merely example descriptions of the structure of the light homogenization layer 211, and the light homogenization layer 211 may further include another structure, provided that the light intensity distribution of the emergent light generated by the light homogenization layer 211 when the collimated light is vertically incident meets that light intensity attenuation is less than or equal to the threshold in the specified emergent angle range.

The anti-glare layer 212 includes the anti-glare structure 2121. As shown in FIG. 21, the anti-glare structure 2121 includes an uneven microstructure appearance formed on a surface of the anti-glare layer 212, and the uneven microstructure appearance is usually disposed in an irregular distribution manner. However, in some other possible implementations, the uneven microstructure appearance may alternatively be disposed in a regular distribution manner. When ambient light is irradiated to such the microstructure appearance, the ambient light is scattered in different directions to avoid glare. Roughness of the anti-glare layer 212 ranges from 0.20 µm to 0.35 µm, and haze of the anti-glare layer 212 ranges from 0 to 35%, for example, 20%. A small haze range has small impact on display imaging definition, and an anti-glare value of the anti-glare layer 212 is less than or equal to 10%. Generally, a thickness of the anti-glare layer 212 is less than or equal to 1 millimeter.

Light emitted by the display panel 220 is homogeneously mixed after passing through the light homogenization layer 211, and the homogeneously mixed light is scattered by the anti-glare layer 212. Because the light emitted by the display panel 220 is homogeneously mixed before being scattered by the anti-glare layer 212, even if the light is scattered by the anti-glare layer 212, scattering is also performed based on the homogeneously mixed light. In this way, the sparkle that is on the screen and that is caused by crosstalk of light of different colors can be suppressed. In addition, the anti-glare layer 212 can maintain low haze. For example, in this embodiment of this application, the haze of the anti-glare layer 212 is less than or equal to 35%. The low haze of the anti-glare layer 212 has small impact on display definition. Therefore, the optical module provided in this embodiment of this application can suppress the sparkle while maintaining high definition.

In a possible implementation, the anti-glare layer 212 may be a glass cover, and the uneven microstructure appearance may be prepared through chemical etching or by spraying an anti-glare material on a surface of a glass material, to form the anti-glare structure 2121.

In another possible implementation, the anti-glare layer 212 may alternatively be a composite cover. For example, the composite cover is formed by combining two different materials through hot pressing based on a thermoplastic material. In this way, boundary surfaces may be formed on contact surfaces of the two different materials, for example, polymethyl methacrylate and polycarbonate (PMMA+PC), and the anti-glare structure is prepared on one surface (usually on the PMMA surface) of the polymethyl methacrylate and the polycarbonate. For example, the anti-glare structure 2121 may be prepared through nano-imprinting or in another manner.

In another possible implementation, the anti-glare layer 212 may alternatively be of a film layer structure. The microstructure appearance on the surface of the anti-glare film layer may be prepared through imprinting, and the anti-glare film layer may be pasted on the screen for use based on a requirement.

Based on the optical module provided in embodiments of this application, an embodiment of this application further provides a display apparatus. FIG. 22 is a diagram of a structure of a display apparatus 200 according to an embodiment of this application.

The display apparatus 200 includes a display panel 220, a polarizer 230, and the optical module 210 provided in embodiments of this application. The optical module 210 includes a light homogenization layer 211 and an anti-glare layer 212. The light homogenization layer 211 is disposed between the display panel 220 and the polarizer 230, and the anti-glare layer 212 is disposed above the polarizer 230. Different layer structures of the display apparatus 200 are fastened and bonded to each other via adhesive layers. For example, an adhesive layer 221c is disposed between the anti-glare layer 212 and the polarizer 230, an adhesive layer 221b is disposed between the polarizer 230 and the light homogenization layer 211, and an adhesive layer 221a is disposed between the light homogenization layer 211 and the display panel 220.

The display panel 220 integrates a substrate, a light-emitting device, a touch element (for example, an in-cell touch pad or an on-cell touch pad), and the like. This is not described in detail in this embodiment. For example, the display panel 220 provided in this embodiment of this application may be an LCD display panel, an OLED display panel, or a display panel of another structure.

The light homogenization layer 211 is a resin material with a grating inside. For example, the light homogenization layer 211 includes the grating and a filling layer, and a refractive index of the grating is different from a refractive index of the filling layer. Light intensity distribution of emergent light generated by the light homogenization layer when collimated light is vertically incident meets that light intensity attenuation is less than a threshold in a specified emergent angle range, for example, in a range of (-2° to +2°) or even (-60° to +60°). The light intensity attenuation of the emergent light is less than or equal to 30%, so that the light emitted by the display panel 220 can be homogeneously mixed.

The polarizer 230 may be a circular polarizer (used in a display architecture of an OLED) or a linear polarizer (used in a display architecture of an LCD).

The anti-glare layer 212 is located above the polarizer 230. The anti-glare layer 212 includes an anti-glare structure 2121. The anti-glare structure 2121 means uneven microstructure appearances on the surface of the anti-glare layer 212. These microstructure appearances can cause diffuse reflection of incident ambient light, to avoid glare on a screen. Because the light homogenization layer 211 is disposed under the anti-glare layer 212, the light emitted by the display panel 220 is incident on the anti-glare layer 212 only after being homogeneously mixed by the light homogenization layer 211, so that when the homogeneously mixed light is scattered by the anti-glare layer 212, a sparkle on the screen caused by crosstalk between different light can be avoided.

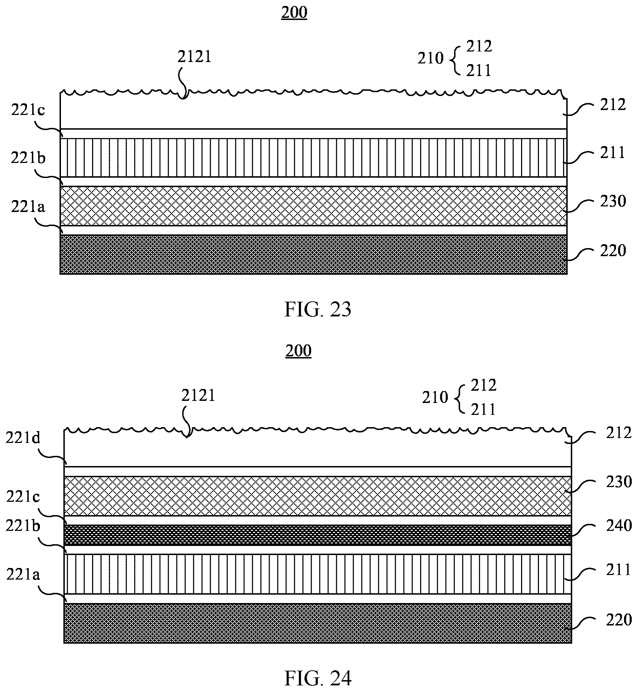

In the example shown in FIG. 22, the light homogenization layer 212 is disposed below the polarizer 230. In another possible implementation, as shown in FIG. 23, an embodiment of this application further provides another display apparatus 200. A difference from the display apparatus provided in the foregoing example lies in that the light homogenization layer 211 may alternatively be disposed above the polarizer 230.

The display apparatus 200 includes a display panel 220, a polarizer 230, and the optical module 210 provided in embodiments of this application. The optical module 210 includes a light homogenization layer 211 and an anti-glare layer 212. The light homogenization layer 211 is disposed above the polarizer 230, the anti-glare layer 212 is disposed above the light homogenization layer 211. Different layer structures of the display apparatus 200 are fastened and bonded to each other via adhesive layers. For example, an adhesive layer 221c is disposed between the anti-glare layer 212 and the light homogenization layer 211, an adhesive layer 221b is disposed between the light homogenization layer 211 and the polarizer 230, and an adhesive layer 221a is disposed between the polarizer 230 and the display panel 220.

A structure and a principle of suppressing glare and a sparkle by the display apparatus 200 provided in this embodiment of this application are basically the same as those in the foregoing example, and a difference lies only in a location of the polarizer 230. Details are not described herein again.

In the foregoing example, the touch element is integrated into the display panel 200. In some other possible implementations, the touch element cannot be integrated into the display panel. For example, an embodiment of this application further provides a display apparatus, as shown in FIG. 24, the display apparatus 200 includes a display panel 220, a light homogenization layer 211, a touch circuit layer 240, a polarizer 230, and an anti-glare layer 212. Adhesive layers are disposed between different layer structures that are fastened and bonded to each other via the adhesive layers. For example, an adhesive layer 221d is disposed between the anti-glare layer 212 and the polarizer 230, an adhesive layer 221c is disposed between the polarizer 230 and the touch circuit layer 240, an adhesive layer 221b is disposed between the touch circuit layer 240 and the light homogenization layer 211, and an adhesive layer 221a is disposed between the light homogenization layer 211 and the display panel 220.

The display apparatus 200 provided in this embodiment of this application includes the light homogenization layer 211 and the anti-glare layer 212. The anti-glare layer 211 includes an anti-glare structure 2121. The anti-glare structure 2121 means uneven microstructure appearances on the surface of the anti-glare layer 212. These microstructure appearances can cause diffuse reflection of incident ambient light, to avoid glare on a screen. The light homogenization layer 211 is configured to homogeneously mix light emitted by the display panel 220. In this way, when the homogeneously mixed light is incident on the anti-glare layer 212 and is scattered by the anti-glare layer 212, the sparkle that is on the screen and that is caused by crosstalk between different light can be avoided.

In the foregoing example, the display apparatus includes the polarizer. With development of display technologies, a color filter on encapsulation (Color filter on encapsulation, COE) technology, also referred to as a polarizer-free technology, has been developed in the industry in recent years. The COE technology is gradually favored in the industry. A color filter layer is integrated in a COE manner, to implement a polarizer-less (POL-Less) objective. This helps reduce an overall thickness of the display apparatus and improve brightness of the display apparatus.

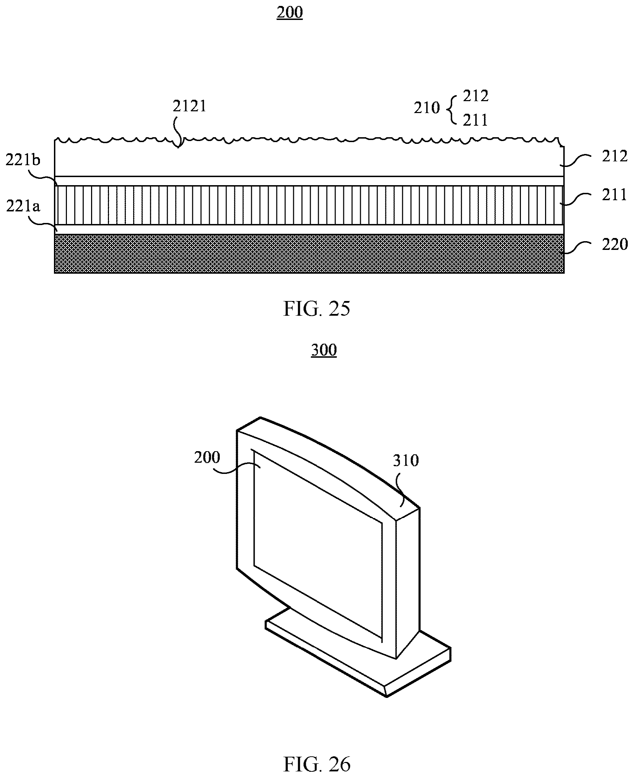

In view of this, an embodiment of this application further provides another display apparatus. FIG. 25 is a diagram of a structure of a display apparatus 200 according to an embodiment of this application.

The display apparatus 200 includes a display panel 220, a light homogenization layer 211, and an anti-glare layer 212. Adhesive layers are disposed between different layer structures that are fastened and bonded to each other via the adhesive layers. For example, an adhesive layer 221b is disposed between the anti-glare layer 212 and the light homogenization layer 211, and an adhesive layer 221a is disposed between the light homogenization layer 211 and the display panel 220.

A main difference between this embodiment of this application and the foregoing example lies in that a polarizer is omitted in this embodiment. The display apparatus 200 provided in this embodiment of this application is mainly used in a display architecture with a COE technology, and the display panel 220 in the display apparatus 200 integrates a substrate, a light-emitting device, a color filter (color filter), and a touch element.

A principle of suppressing glare and a sparkle by the display apparatus 200 provided in this embodiment of this application is basically the same as that in the foregoing example. For example, the display apparatus 200 provided in this embodiment of this application includes the light homogenization layer 211 and the anti-glare layer 212. The anti-glare layer 212 includes an anti-glare structure 2121. The anti-glare structure 2121 means uneven microstructure appearances on the surface of the anti-glare layer 212. These microstructure appearances can cause diffuse reflection of ambient light that is incident on the anti-glare layer 212, to avoid glare on a screen. The light homogenization layer 211 is configured to homogeneously mix light emitted by the display panel 220. In this way, when the homogeneously mixed light is incident on the anti-glare layer 212 and is scattered by the anti-glare layer 212, the sparkle that is on the screen and that is caused by crosstalk between different light can be avoided.

An embodiment of this application further provides a display device 300. As shown in FIG. 26, the display device 300 includes a housing 310 and the display apparatus 200 provided in the foregoing examples. The display apparatus 200 is mounted on the housing 310, and the housing 310 is configured to support and protect the display apparatus 200.

For example, the display device 300 may be any device having a display function, for example, a display or a television.

An embodiment of this application further provides an electronic device. The electronic device may be the electronic device shown in FIG. 1. The electronic device includes a processor and the display apparatus provided in the foregoing examples. The display apparatus is connected to the processor, and is configured to display information.

For example, the electronic device may be an electronic device like a mobile phone, a tablet computer, a personal computer, a television, or an intelligent wearable device, or may be any electronic device having a display function.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another place. The storage medium may be any available medium accessible to a general-purpose or a dedicated computer.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An optical module, wherein the optical module is used in a display apparatus, the display apparatus comprises a display panel, and the optical module comprises a light homogenization layer and an anti-glare layer that are sequentially disposed in a light emitting direction of the display panel; and
light intensity distribution of emergent light generated by the light homogenization layer when collimated light is vertically incident meets that light intensity attenuation is less than or equal to a first threshold in a specified emergent angle range.

2. The optical module according to claim 1, wherein roughness of the anti-glare layer is 0.2 µm to 0.35 µm, and haze of the anti-glare layer is less than or equal to a second threshold.

3. The optical module according to claim 1 or 2, wherein the light intensity attenuation indicates attenuation of light intensity of the emergent light relative to light intensity of emergent light at an emergent angle of 0, and the first threshold is less than or equal to 30%.

4. The optical module according to any one of claims 1 to 3, wherein the specified emergent angle range comprises (-2°~ + 2°) to (-60°~ + 60°).

5. The optical module according to any one of claims 1 to 4, wherein the light homogenization layer comprises a filling layer and a grating embedded into the filling layer, and a refractive index of the grating is different from a refractive index of the filling layer.

6. The optical module according to claim 5, wherein the refractive index of the grating and the refractive index of the filling layer meet: |n1-n2|>0.005, n1 is the refractive index of the grating, and n2 is the refractive index of the filling layer.

7. The optical module according to claim 5, wherein the filling layer covers a side that is of the grating and that is away from the display panel.

8. The optical module according to claim 7, wherein the refractive index of the grating and the refractive index of the filling layer meet: n1-n2>0.005, n1 is the refractive index of the grating, and n2 is the refractive index of the filling layer.

9. The optical module according to any one of claims 5 to 8, wherein the grating comprises a plurality of columnar structures, and a distance between centers of any two of the columnar structures and a feature size of the columnar structure meet: 3D≥P>D, D is the feature size of the columnar structure, and P is the distance between the centers of the any two of the columnar structures.

10. The optical module according to any one of claims 1 to 9, wherein a thickness of the light homogenization layer is less than or equal to 150 µm.

11. The optical module according to any one of claims 2 to 10, wherein the second threshold is less than or equal to 35%.

12. The optical module according to any one of claims 1 to 11, wherein an anti-glare value of the anti-glare layer is less than or equal to 10%.

13. The optical module according to any one of claims 1 to 12, wherein a thickness of the anti-glare layer is less than or equal to 1 mm.

14. A display apparatus, wherein the display apparatus comprises a display panel, a polarizer, and the optical module according to any one of claims 1 to 13, the optical module comprises the light homogenization layer and the anti-glare layer, and the polarizer, the light homogenization layer, and the anti-glare layer are sequentially disposed in the light emitting direction of the display panel, or the light homogenization layer, the polarizer, and the anti-glare layer are sequentially disposed in the light emitting direction of the display panel.

15. The display apparatus according to claim 14, wherein the display apparatus further comprises a touch circuit layer, and the touch circuit layer is disposed between the light homogenization layer and the polarizer.

16. The display apparatus according to claim 14 or 15, wherein the display apparatus further comprises a touch circuit, and the touch circuit is integrated on the display panel.

17. A display apparatus, wherein the display apparatus comprises a display panel and the optical module according to any one of claims 1 to 13, the optical module comprises the light homogenization layer and the anti-glare layer, a color filter is provided on the display panel, and the light homogenization layer and the anti-glare layer are sequentially disposed in the light emitting direction of the display panel.

18. A display device, comprising a housing and the display apparatus according to any one of claims 14 to 17, wherein the display apparatus is mounted on the housing, and the housing is configured to support and protect the display apparatus.

19. An electronic device, wherein the electronic device comprises a processor and the display apparatus according to any one of claims 14 to 17, and the display apparatus is electrically connected to the processor.
